(19)

**Europäisches Patentamt**
**European Patent Office**
**Office européen des brevets**

(11) **EP 2 407 891 A1**

(12) **EUROPEAN PATENT APPLICATION**
published in accordance with Art. 153(4) EPC

(43) Date of publication:
**18.01.2012 Bulletin 2012/03**

(51) Int Cl.:
***G06F 17/14*** *(2006.01)*

(21) Application number: **09841361.0**

(22) Date of filing: **20.11.2009**

(86) International application number:
**PCT/CN2009/075054**

(87) International publication number:
**WO 2010/102492 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.03.2009 CN 200910128401**

(71) Applicant: **ZTE Corporation**
**Shenzhen, Guangdong 518057 (CN)**

(72) Inventor: **DU, Fanping**
**Shenzhen**
**Guangdong 518057 (CN)**

(74) Representative: **Jansen, Cornelis Marinus**
**VEREENIGDE**
**Johan de Wittlaan 7**
**2517 JR Den Haag (NL)**

(54) **METHOD AND PROCESSING APPARATUS FOR IMPLEMENTING IFFT BY USING FFT**

(57)    A method for realizing IFFT by FFT is provided, which comprises: performing a left mirror permutation on an input data sequence, then performing FFT, and dividing the result with N, so as to obtain IFFT processing data; or performing FFT on an input data sequence, then performing a left mirror permutation on the result of FFT and being divided by N, so as to obtain IFFT processing data; the left mirror permutation is: inverting the sequence of the other data except the first data; the N is the length of the input data sequence. Also, an IFFT processing apparatus comprising an FFT computing unit and a left mirror permutation unit is provided.

Fig. 3

**Description**

**TECHNICAL FIELD**

The present invention relates to the field of digital signal processing, particularly to a method and processing apparatus for realizing Inverse Fast Fourier Transform (IFFT) by Fast Fourier Transform (FFT).

**BACKGROUND**

In digital signal processing, Discrete Fourier Transform (DFT) is an important transform in signal spectrum analysis and processing. Because the computing amount of directly computing DFT is direct proportional to the square of transform interval length N, and when N is relative large, the computing amount of DFT is too large. Before FFT is found, it is impractical to perform spectrum analysis and real time processing of signal directly by DFT. The situation has not changed fundamentally until a fast algorithm of DFT, namely FFT, was found in 1965.

FFT decomposes DFT with long sequences into DFT with short sequences, which reduces the computing amount greatly, and widely applies DFT to the fields of spectrum analysis, filter design and etc.

DFT of a finite long sequence x(n) signal with length N is shown as the following formula:

$$X(k) = DFT[x(n)] = \sum_{n=0}^{N-1} x(n) W_N^{nk} \ (k = 0,1,\cdots N-1)$$

Under the general condition that x(n) is a sequence of complex numbers, for a certain value k, computing value X(k) directly according to above formula needs N times of complex multiplication and (N-1) times of complex addition.

Because the coefficient $W_N^{nk} = e^{-j\frac{2\pi}{N}nk}$ is a periodic function, the periodicity and symmetry thereof are as follows:

the symmetry of $W_N^{nk}$ is $(W_N^{nk})^* = W_N^{-nk}$, and $W_N^{k+n/2} = -W_N^{k}$

the periodicity of $W_N^{nk}$ is $W_N^{n(N+k)} = W_N^{k(N+n)} = W_N^{nk}$; and $W_N^{n(N-k)} = W_N^{k(N-n)} = W_N^{-nk}$

DFT of the x(n) signal can be decomposed into DFT with short sequences to the greatest extent by using the periodicity and symmetry of the $W_N^{nk}$.

FFT based on a butterfly unit is involved in common textbooks about digital signal processing, at the same time, the current textbooks also refer to how to fast compute Inverse Discrete Fourier Transform (IDFT) to digital signal by FFT, this computing method is called IFFT as follows:

setting DFT of the sequence x(n) signal to be X(k), then IDFT is:

$$x(n) = IDFT[X(k)] = \frac{1}{N} \sum_{k=0}^{N-1} X(k) W_N^{-nk} \ (n = 0,1,\cdots N-1)$$

conjugating IDFT is:

$$x^*(n) = \frac{1}{N} \sum_{k=0}^{N-1} X^*(k) W_N^{nk}$$

conjugating again is:

$$x(n) = \frac{1}{N}[\sum_{k=0}^{N-1} X^*(k)W_N^{nk}]^*$$

according to above description, the method for fast computing IDFT to a digital signal by FFT is as follows:

step 1: conjugating X(k) to obtain $X^*(k)$;

step 2: performing FFT operation on $X^*(k)$ ;

step 3: conjugating the operation result and being divided by N to obtain x(n).

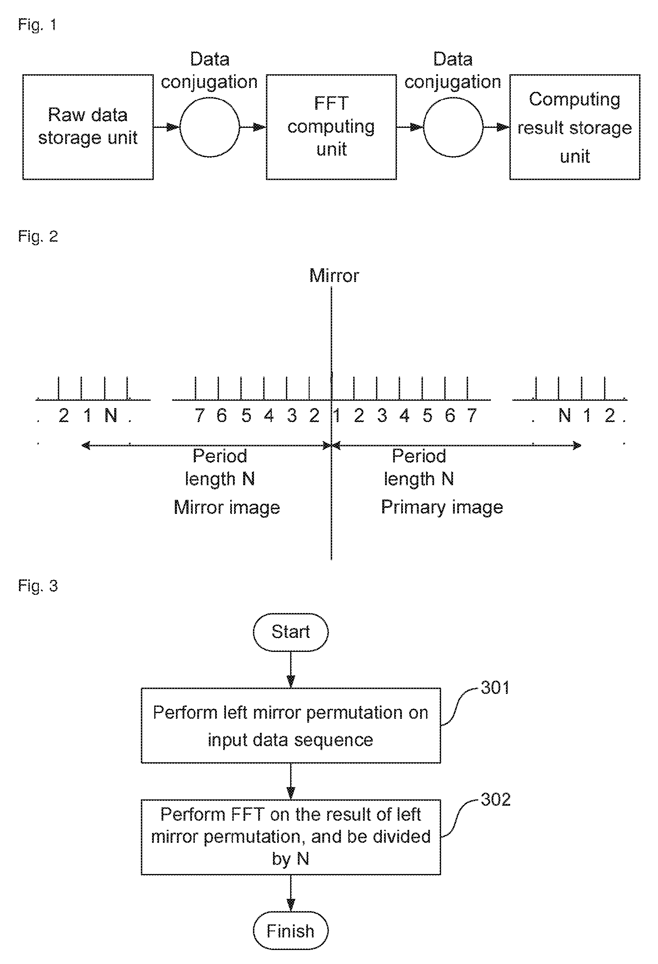

As shown in Fig. 1, an IFFT processor of the prior art computes IDFT to a digital signal by an FFT computing unit; as can be seen from the drawing, the IFFT processing procedure of the prior art is: firstly performing a conjugating operation on a raw data, then performing FFT to the data by using the FFT computing unit, and performing a conjugating operation on the result data, so as to obtain the computing result of IDFT and store it.

This method cleverly makes use of the property of conjugate symmetry to compute IDFT by FFT, and is featured by using a known rotation factor $W_N^{nk}$ of FFT, there is no need to compute a new rotation factor $W_N^{-nk}$, but still need to conjugate the input and output data, which causes the complication of processing work and reduces the processing efficiency.

**SUMMARY**

The present invention provides a method and processing apparatus for realizing IFFT by FFT, aiming at solving the technical problem, which does not need the conjugating operation before and after FFT, improving the utilization ratio of resources and the processing efficiency.

In order to achieve the purpose above, the technical solution of the present invention is realized as follows.

The present invention provides a method for realizing IFFT by FFT, which comprises:

performing a left mirror permutation on an input data sequence, then performing FFT, and dividing the result with N, so as to obtain IFFT processing data;

the left mirror permutation is: inverting the sequence of the other data except the first data; the N is the length of the input data sequence.

Further, the method specifically may comprise:

in a storage process of the input data sequence, storing the other data except the first data in inverted sequence when writing the input data;

orderly reading the input data according to the storage sequence, performing FFT, and dividing the result with N, so as to obtain the IFFT processing data.

Further, the method specifically may comprise:

in the storage process of input data sequence, storing according to the input data sequence;

when reading the input data, firstly reading the first input data, then reading the other input data from back to front, namely, in inverted sequence, then performing FFT, and dividing the result with N, so as to obtain IFFT processing data.

The present invention further provides a method for realizing IFFT by FFT, which comprises:

performing FFT on an input data sequence, then performing a left mirror permutation on the result of FFT and dividing with N, so as to obtain IFFT processing data;

the left mirror permutation is: inverting the sequence of the other data except the first data; the N is the length of the input data sequence.

Further, the method specifically may comprise:

performing FFT on the input data sequence, after storing the result data sequence of FFT, when reading the result data sequence of FFT, firstly reading the first result data,,then reading the other result data from back to front, namely, in inverted sequence, and dividing all the result data with N, so as to obtain the IFFT processing data.

Further, the method specifically may comprise:

performing FFT on the input data sequence, after dividing the result data sequence of FFT with N and storing, when reading the result data sequence of FFT, firstly reading the first result data, then reading the other result data from back to front, namely, in inverted sequence, so as to obtain the IFFT processing data.

Further, the method specifically may comprise:

performing FFT on the input data sequence, dividing the obtained result data sequence of FFT with N, and storing the other data except the first data in inverted sequence; and reading according to the storage sequence when reading the result data sequence of FFT, so as to obtain IFFT processing data.

Further, the method specifically may comprise:

performing FFT on the input data sequence, to the obtained result data sequence of FFT, storing the other data except the first data in inverted sequence; reading according to the storage sequence when reading the result data sequence of FFT, and dividing with N, so as to obtain IFFT processing data.

The present invention further provides an IFFT processing apparatus, which comprises an FFT computing unit and a left mirror permutation unit;

the left mirror permutation unit is used for used for receiving an input data sequence, inverting the sequence of the other data except the first data, and outputting the data to the FFT computing unit;

the FFT computing unit is used for receiving the data output by the left mirror permutation unit, performing FFT, and dividing the result with N, so as to obtain IFFT processing data;

the N is the length of the input data sequence.

The left mirror permutation unit may be realized by a raw data storage unit.
The present invention further provides an IFFT processing apparatus, which comprises an FFT computing unit and a left mirror permutation unit;

the FFT computing unit is used for performing FFT on an input data sequence, and outputting a result data sequence of FFT to the left mirror permutation unit;

the left mirror permutation unit is used for receiving the result data sequence of FFT output by the FFT computing unit, inverting the sequence of the other data except the first data and dividing with N, so as to obtain IFFT processing data;

the N is the length of the input data sequence.

The left mirror permutation unit may comprise a computing result storage unit and a divider which are interconnected;
Wherein, the computing result storage unit is used for performing the operation of inverting the data sequence;

the divider is used for performing the operation of dividing the data related to inverting sequence with N.

The connection relationship between the computing result storage unit and the divider may be: an output side of the computing result storage unit is connected with an input side of the divider; or, an input side of the computing result storage unit is connected with an output side of the divider.

Compared with the prior art, the present invention does not need to conjugate the input and output data any more, IFFT can be realized just by rearranging input or output data in relatively simple processing way, the utilization ratio of resources and the processing efficiency is improved.

## BRIEF DESCRIPTION OF THE DRAWING

Fig. 1 shows a schematic diagram of realizing IFFT in the prior art;

Fig. 2 shows a mirror schematic diagram of a discrete orderly sequence;

Fig. 3 shows a flow chart of a method in embodiment 1 of the present invention;

Fig. 4 shows a schematic diagram of an apparatus in embodiment 1 of the present invention;

Fig. 5 shows a schematic diagram of the first way in embodiment 1 of the present invention;

Fig. 6 shows a schematic diagram of the second way in embodiment 1 of the present invention;

Fig. 7 shows a flow chart of a method in embodiment 2 of the present invention;

Fig. 8 shows a schematic diagram of an apparatus in embodiment 2 of the present invention;

Fig. 9 shows a schematic diagram of the first way in embodiment 2 of the present invention;

Fig. 10 shows a schematic diagram of the second way in embodiment 2 of the present invention;

Fig. 11 shows a schematic diagram of the third way in embodiment 2 of the present invention,

Fig. 12 shows a schematic diagram of the fourth way in embodiment 2 of the present invention.

## DETAILED DESCRIPTION

In the present invention, there is no need to conjugate input and output data, but just to perform left mirror permutation on the input data or output data. The left mirror permutation is: inversing the sequence of other data except the first data, namely, IFFT can be realized by rearranging the input or output data in a relatively simple processing way.

In the following, the present invention is described in detail with reference to the drawings and embodiments.

Fig. 2 shows a mirror schematic diagram of a discrete orderly sequence; because the first point of a discrete orderly sequence is always on the far left, so the order of the mirror sequence is not completely the inverse of the original sequence, namely the actual mirror sequence needs to take one more point leftwards and abandons the rightmost point, namely the mirror order of the discrete sequence is (1, N, N-1, ... 7, 6, 5, 4,3,2).

Here, the mirror image aligning leftwards of the discrete orderly sequence is called a left mirror image for short, namely, the left mirror image of the discrete orderly sequence is orderly inverting the sequence of other data except the leftmost point (the first point) of the orderly sequence.

A permutation matrix will be used, which is any rearrangement of row (column) order of a unit matrix, and have the following characters:

character 1: left multiplying a matrix (column vector), then the rows of the matrix (column vector) is being rearranged;
character 2: right multiplying a matrix (row vector), then the columns of the matrix (row vector) is being rearranged;
character 3: the product of the two permutation matrixes is an unit matrix.

Then the following left mirror image permutation matrix can be obtained according to the definition of the left mirror image of the discrete orderly sequence:

$$\begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \\ & & & \overline{-----N----} & & \end{pmatrix}$$

in addition, the following IDFT matrix can be obtained according to the definition of IDFT:

$$\begin{pmatrix} W_N^0 & W_N^0 & W_N^0 & ... & W_N^0 & W_N^0 \\ W_N^0 & W_N^{-1} & W_N^{-2} & ... & W_N^{-(N-2)} & W_N^{-(N-1)} \\ W_N^0 & W_N^{-2} & W_N^{-4} & ... & W_N^{-2(N-2)} & W_N^{-2(N-1)} \\ ... & ... & ... & ... & ... & ... \\ W_N^0 & W_N^{-(N-2)} & W_N^{-2(N-2)} & ... & W_N^{-(N-2)(N-2)} & W_N^{-(N-2)(N-1)} \\ W_N^0 & W_N^{-(N-1)} & W_N^{-2(N-1)} & ... & W_N^{-(N-2)(N-1)} & W_N^{-(N-1)(N-1)} \\ & & & \overline{------N-------} & & \end{pmatrix}$$

then the left mirror image of IDFT is left multiplying the left mirror image permutation matrix by the IDFT matrix, as the following formula:

$$\begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \\ & & & \overline{-------N--------} & & \end{pmatrix} * \begin{pmatrix} W_N^0 & W_N^0 & W_N^0 & ... & W_N^0 & W_N^0 \\ W_N^0 & W_N^{-1} & W_N^{-2} & ... & W_N^{-(N-2)} & W_N^{-(N-1)} \\ W_N^0 & W_N^{-2} & W_N^{-4} & ... & W_N^{-2(N-2)} & W_N^{-2(N-1)} \\ ... & ... & ... & ... & ... & ... \\ W_N^0 & W_N^{-(N-2)} & W_N^{-2(N-2)} & ... & W_N^{-(N-2)(N-2)} & W_N^{-(N-2)(N-1)} \\ W_N^0 & W_N^{-(N-1)} & W_N^{-2(N-1)} & ... & W_N^{-(N-2)(N-1)} & W_N^{-(N-1)(N-1)} \\ & & & \overline{------N------} & & \end{pmatrix}$$

$$= \begin{pmatrix} W_N^0 & W_N^0 & W_N^0 & ... & W_N^0 & W_N^0 \\ W_N^0 & W_N^{-(N-1)} & W_N^{-2(N-1)} & ... & W_N^{-(N-2)(N-1)} & W_N^{-(N-1)(N-1)} \\ W_N^0 & W_N^{-(N-2)} & W_N^{-2(N-2)} & ... & W_N^{-(N-2)(N-2)} & W_N^{-(N-2)(N-1)} \\ ... & ... & ... & ... & ... & ... \\ W_N^0 & W_N^{-2} & W_N^{-4} & ... & W_N^{-2(N-2)} & W_N^{-2(N-1)} \\ W_N^0 & W_N^{-1} & W_N^{-2} & ... & W_N^{-(N-2)} & W_N^{-(N-1)} \\ & & & \overline{------N------} & & \end{pmatrix} (1)$$

because $W_N^{mN} = 1$, then the result of multiplying each element in the right matrix of the formula (1) by $W_N^{mN}$ is not changed, this is the periodicity of $W_N^l$, namely, $W_N^l = W_N^l * W_N^{mN} = W_N^{l+mN}$; in this way, multiplying all the elements of the second column by $W_N^N$, multiplying all the elements of the third column by $W_N^{2N}$, ... and multiplying all the elements of the Nth column by $W_N^{(N-1)N}$, then right part of the formula (1) can be simplified into:

$$\begin{pmatrix} W_N^0 & W_N^0 & W_N^0 & ... & W_N^0 & W_N^0 \\ W_N^0 & W_N^1 & W_N^2 & ... & W_N^{(N-2)} & W_N^{(N-1)} \\ W_N^0 & W_N^2 & W_N^4 & ... & W_N^{2(N-2)} & W_N^{2(N-1)} \\ ... & ... & ... & ... & ... & ... \\ W_N^0 & W_N^{N-2} & W_N^{2(N-2)} & ... & W_N^{(N-2)(N-2)} & W_N^{(N-2)(N-1)} \\ W_N^0 & W_N^{N-1} & W_N^{2(N-1)} & ... & W_N^{(N-1)(N-2)} & W_N^{(N-1)(N-1)} \\ & & & \text{---}N\text{---} & & \end{pmatrix}$$

obviously, this matrix is a DFT matrix, which proves that IDFT and DFT are left mirror images of each other.

As the above conclusion is drawn, fast computing IDFT by FFT can be performed according to the character, thereby realizing IFFT.

Setting DFT of the sequence x(n) to be X(k), then IDFT is:

$$x(n) = IDFT[X(k)] = \frac{1}{N} \sum_{k=0}^{N-1} X(k) W_N^{-nk} \ (n = 0, 1, \cdots N-1)$$

namely:

$$x(n) = \frac{1}{N}(X(0), x(1)...x(N-1)) \begin{pmatrix} W_N^0 & W_N^0 & W_N^0 & ... & W_N^0 & W_N^0 \\ W_N^0 & W_N^{-1} & W_N^{-2} & ... & W_N^{-(N-2)} & W_N^{-(N-1)} \\ W_N^0 & W_N^{-2} & W_N^{-4} & ... & W_N^{-2(N-2)} & W_N^{-2(N-1)} \\ ... & ... & ... & ... & ... & ... \\ W_N^0 & W_N^{-(N-2)} & W_N^{-2(N-2)} & ... & W_N^{-(N-2)(N-2)} & W_N^{-(N-2)(N-1)} \\ W_N^0 & W_N^{-(N-1)} & W_N^{-2(N-1)} & ... & W_N^{-(N-2)(N-1)} & W_N^{-(N-1)(N-1)} \\ & & & \text{---}N\text{---} & & \end{pmatrix} \quad (2)$$

obtaining from the character 3 of the permutation matrix:

$$(X(0), x(1)...x(N-1)) = (X(0), x(1)...x(N-1)) \begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \end{pmatrix} \begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \end{pmatrix}$$

namely:

$$(X(0), x(1)...x(N-1)) = (X(0), x(N-1)...x(1)) \begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \end{pmatrix} \quad (3)$$

then obtaining by substituting the formula (3) into the formula (2):

$$x(n) = \frac{1}{N}(X(0), x(N-1)...x(1)) \begin{pmatrix} 1 & 0 & 0 & ... & 0 & 0 \\ 0 & 0 & 0 & ... & 0 & 1 \\ 0 & 0 & 0 & ... & 1 & 0 \\ ... & ... & ... & ... & ... & ... \\ 0 & 0 & 1 & ... & 0 & 0 \\ 0 & 1 & 0 & ... & 0 & 0 \end{pmatrix} \begin{pmatrix} W_N^0 & W_N^0 & W_N^0 & ... & W_N^0 & W_N^0 \\ W_N^0 & W_N^{-1} & W_N^{-2} & ... & W_N^{-(N-2)} & W_N^{-(N-1)} \\ W_N^0 & W_N^{-2} & W_N^{-4} & ... & W_N^{-2(N-2)} & W_N^{-2(N-1)} \\ ... & ... & ... & ... & ... & ... \\ W_N^0 & W_N^{-(N-2)} & W_N^{-2(N-2)} & ... & W_N^{-(N-2)(N-2)} & W_N^{-(N-2)(N-1)} \\ W_N^0 & W_N^{-(N-1)} & W_N^{-2(N-1)} & ... & W_N^{-(N-2)(N-1)} & W_N^{-(N-1)(N-1)} \end{pmatrix}$$

because the DFT matrix can be obtained by left multiplying the left mirror image permutation matrix by the IDFT matrix, so:

$$x(n) = \frac{1}{N}(X(0, x(N-1)...x(1)) \begin{pmatrix} W_N^0 & W_N^0 & W_N^0 & ... & W_N^0 & W_N^0 \\ W_N^0 & W_N^1 & W_N^2 & ... & W_N^{(N-2)} & W_N^{(N-1)} \\ W_N^0 & W_N^2 & W_N^4 & ... & W_N^{2(N-2)} & W_N^{2(N-1)} \\ ... & ... & ... & ... & ... & ... \\ W_N^0 & W_N^{N-2} & W_N^{2(N-2)} & ... & W_N^{(N-2)(N-2)} & W_N^{(N-2)(N-1)} \\ W_N^0 & W_N^{N-1} & W_N^{2(N-1)} & ... & W_N^{(N-1)(N-2)} & W_N^{(N-1)(N-1)} \end{pmatrix} \quad (4)$$

so according to the formula (4), it is concluded that IDFT can be obtained by performing DFT after performing the left mirror permutation on the input data.

Likewise, because the IDFT matrix is a symmetric matrix, so the results of left or right multiplying the left mirror image permutation matrix by the IDFT matrix are the same; and it is easy to prove that IDFT can be obtained by performing the left mirror permutation after performing DFT on the input data.

Embodiment 1

As shown in Fig. 3, the method in the embodiment of the present invention comprises the following steps:

step 301: performing a left mirror permutation on an input data sequence;

step 302: performing FFT on the result of the left mirror permutation, and dividing with N, so as to obtain IFFT processing data.

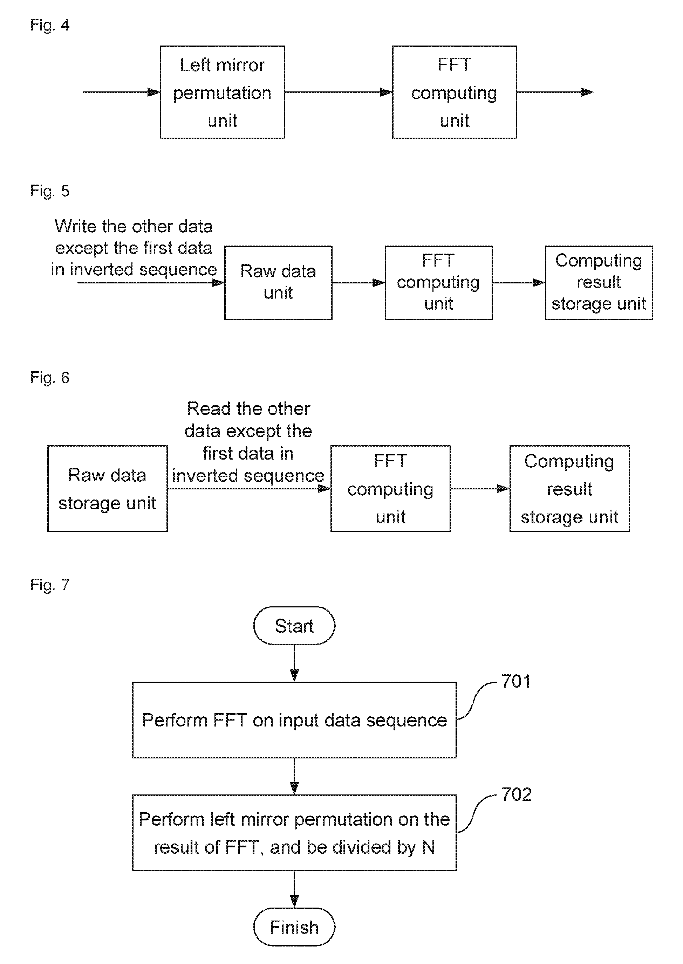

Wherein, the left mirror permutation is: inverting the sequence of other data except the first data, i.e., setting the other data in inverted sequence except the first data;
The N is the length of the input data sequence (namely, the number of the input data).
As shown in Fig. 4, an IFFT computing unit comprises a left mirror permutation unit and an FFT computing unit; wherein, the left mirror permutation unit is used for receiving the input data sequence, inverting the sequence of the other data except the first data, and outputting the data to the FFT computing unit;
the FFT computing unit is used for receiving the data output by the left mirror permutation unit, performing FFT, and dividing the result with N, so as to obtain the IFFT processing data.
In practical application, the function of the left mirror permutation unit entity can be realized by a storage unit with the function of data storing and providing, for example, a raw data storage unit. When performing operations related to the left mirror permutation, aiming at the raw data storage unit, the left mirror permutation can be realized by directly adjusting the sequence of reading/writing data in the process of inputting and outputting the data, specifically, multiple ways can be adopted to realize aiming at the embodiment, for example:
the first way: with reference to Fig. 5, in the storage process of an input data sequence, when writing the input data into the specified address in the raw data storage unit, storing the other data except the first data in inverted sequence; when using the FFT computing unit to compute, orderly reading the input data from the raw data storage unit according to the storage sequence, performing FFT in the FFT computing unit, and dividing the result with N, so as to obtain the IFFT processing data and storing in the computing result storage unit;
the second way: with reference to Fig. 6, in the storage process of an input data sequence, storing according to the input data sequence in the raw data storage unit; when reading the input data from the raw data storage unit, firstly reading the first input data, then reading the other input data from back to front, namely, in inverted sequence, performing FFT in the FFT computing unit, and dividing the result with N, so as to obtain the IFFT processing data and storing in the computing result storage unit.

Embodiment 2

As shown in Fig. 7, the method in the embodiment of the present invention comprises the following steps:

step 701: performing FFT on an input data sequence;

step 702: performing the left mirror permutation on the result of FFT, and dividing with N, so as to obtain the IFFT processing data.

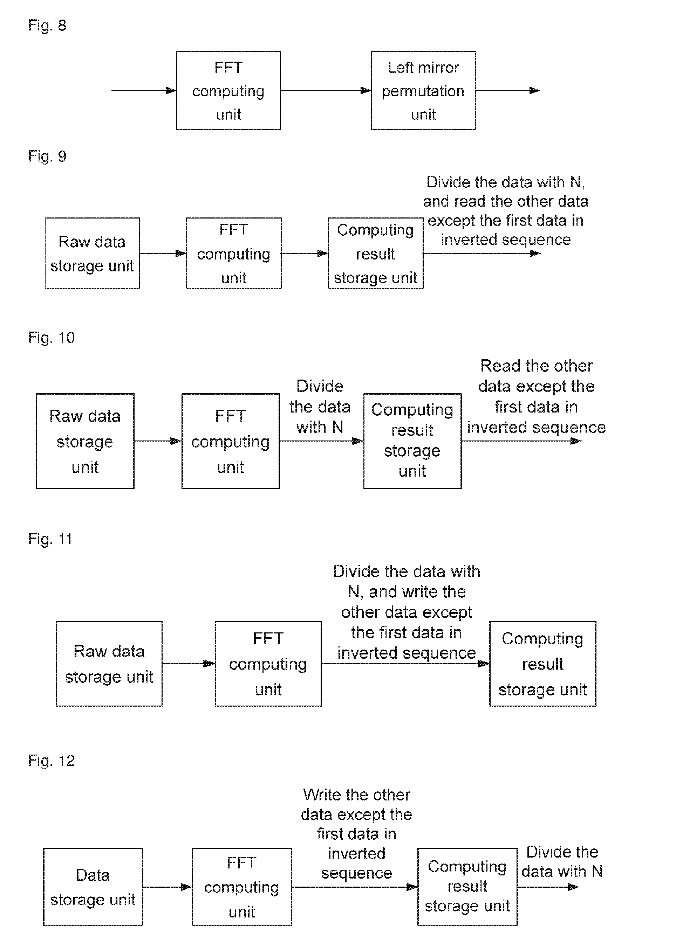

Wherein, the left mirror permutation is: inverting the sequence of the other data except the first data, i.e., setting the other data in inverted sequence except the first data;
the N is the length of the input data sequence (namely, the number of the input data).
As shown in Fig. 8, the IFFT computing unit comprises a left mirror permutation unit and an FFT computing unit; wherein, the FFT computing unit is used for performing FFT on the input data sequence, and outputting the result data sequence of FFT to the left mirror permutation unit;
the left mirror permutation unit is used for receiving the result data sequence of FFT output by the FFT computing unit, inverting the sequence of the other data except the first data, and dividing with N, so as to obtain the IFFT processing data.
Being similar to the principle in the embodiment 1, in practical application, the function of the left mirror permutation unit entity can be realized by a storage unit (for example, a computing result storage unit) with the function of data storing and providing and a divider connected therewith. When performing operations related to the left mirror permutation, aiming at the raw data storage unit, the left mirror permutation can be realized by directly adjusting the sequence of reading/writing data in the process of inputting and outputting the data, specifically, multiple ways can be adopted to realize aiming at the embodiment, for example:

the first way: with reference to Fig. 9, taking out the input data sequence from the raw data storage unit, performing FFT in the FFT computing unit, and storing the result data sequence of FFT in the computing result storage unit; when reading the result data sequence of FFT from the computing result storage unit, firstly reading the first result data, then reading other result data from back to front, namely, in inverted sequence, and dividing all the result data with N by the divider, so as to obtain the IFFT processing data;

the second way: with reference to Fig. 10, taking out the input data sequence from the raw data storage unit, performing FFT in the FFT computing unit, dividing the result data sequence of FFT with N by the divider and then storing in the computing result storage unit; when reading the result data sequence of FFT from the computing result storage unit, firstly reading the first result data, then reading other result data from back to front, namely, in inverted sequence, so as to obtain the IFFT processing data;

the third way: with reference to Fig. 11, taking out the input data sequence from the raw data storage unit, performing FFT in the FFT computing unit, dividing the obtained result data sequence of FFT with N by the divider, and storing the other data except the first data in the computing result storage unit in inverted sequence; reading according to the storage sequence when reading the result data sequence of FFT, so as to obtain the IFFT processing data;

the fourth way: with reference to Fig. 12, taking out the input data sequence from the raw data storage unit, performing FFT in the FFT computing unit, for the obtained result data sequence of FFT, storing the other data except the first data in the computing result storage unit in inverted sequence; reading according to the storage sequence when reading the result data sequence of FFT, and sending to the divider to divide with N, so as to obtain the IFFT processing data.

It can be seen from the ways above that, whatever the connection relationship between the computing result storage unit and the divider is, for example: the output side of the computing result storage unit is connected with the input side of the divider, or the input side of the computing result storage unit is connected with the output side of the divider, the functions realized by the left mirror permutation unit entity can be realized by combining the computing result storage unit with the divider: aiming at the result data sequence of FFT, inverting the sequence of the other data except the first data, and dividing with N, so as to obtain the IFFT processing data.

The method and apparatus of the present invention can be widely applied to a Digital Signal Processor (DSP), and Field Programmable Gate Array (FPGA) and the like that using FFT/IFFT to process. Though the present invention is not complex in theory and demonstration process, the conclusion is very novel and simple; the relation of left mirror image between DFT and IDFT, and the method by using the same method to compute IDFT so as to realize IFFT cannot be retrieved in all the current textbooks, resources and Internet. Compared with the traditional method, there is no need to conjugate input and output data, but just rearrange the order of the input data or output data, thereby reducing the steps of operation and improving the utilization ratio of resources and the processing efficiency.

Certainly, the present invention may have many other embodiments. For those skilled in the art, various corresponding modifications and equivalent deformations may be made according to the present invention without departing from the spirit and the substance of the present invention, but these corresponding modifications and equivalent deformations are within the protection scope of the claims of the present invention.

**Claims**

1.    A method for realizing Inverse Fast Fourier Transform (IFFT) by Fast Fourier Transform (FFT), comprising:

   performing a left mirror permutation on an input data sequence, then performing FFT, and dividing a result with N, so as to obtain IFFT processing data;
   the left mirror permutation is: inverting the sequence of the other data except the first data; the N is the length of the input data sequence.

2.    The method according to claim 1, wherein performing the left mirror permutation on the input data sequence is: in a storage process of the input data sequence, storing the other data except the first data in inverted sequence when writing the input data; and orderly reading the input data according to the storage sequence.

3.    The method according to claim 1, wherein performing the left mirror permutation on the input data sequence is: in a storage process of the input data sequence, storing according to the input data sequence; when reading the input data, firstly reading the first input data, then reading the other input data from back to front, namely, in inverted sequence.

4.    A method for realizing IFFT by FFT, comprising:

performing FFT on an input data sequence, and performing a left mirror permutation on the result of FFT and dividing with N, so as to obtain IFFT processing data;
the left mirror permutation is: inverting the sequence of the other data except the first data; the N is the length of the input data sequence.

5. The method according to claim 4, wherein performing the left mirror permutation on the result of FFT and dividing with N is: after storing the result data sequence of FFT, when reading the result data sequence of FFT, firstly reading the first result data, then reading the other result data from back to front, namely, in inverted sequence, and dividing all the result data with N.

6. The method according to claim 4, wherein performing the left mirror permutation on the result of FFT and dividing with N is: after dividing the result data sequence of FFT with N and storing, when reading the result data sequence of FFT, firstly reading the first result data, then reading the other result data from back to front, namely, in inverted sequence.

7. The method according to claim 4, wherein performing the left mirror permutation on the result of FFT and dividing with N is: dividing the obtained result data sequence of FFT with N, and storing the other data except the first data in inverted sequence; and reading according to the storage sequence when reading the result data sequence of FFT.

8. The method according to claim 4, wherein performing the left mirror permutation on the result of FFT and dividing with N is: for the obtained result data sequence of FFT, storing the other data except the first data in inverted sequence; and reading according to the storage sequence when reading the result data sequence of FFT, and dividing with N.

9. An IFFT processing apparatus, comprising an FFT computing unit, further comprising a left mirror permutation unit;
the left mirror permutation unit is used for receiving an input data sequence, inverting the sequence of the other data except the first data, and then outputting the data to the FFT computing unit;
the FFT computing unit is used for receiving the data output by the left mirror permutation unit, performing FFT, and dividing the result with N, so as to obtain IFFT processing data;
the N is the length of the input data sequence.

10. The apparatus according to claim 9, wherein the left mirror permutation unit is realized by a raw data storage unit.

11. An IFFT processing apparatus, comprising an FFT computing unit, further comprising a left mirror permutation unit;
the FFT computing unit is used for performing FFT on an input data sequence, and outputting a result data sequence of FFT to the left mirror permutation unit;
the left mirror permutation unit is used for receiving the result data sequence of FFT output by the FFT computing unit, inverting the sequence of the other data except the first data and dividing with N, so as to obtain IFFT processing data;
the N is the length of the input data sequence.

12. The apparatus according to claim 11, wherein the left mirror permutation unit comprises a computing result storage unit and a divider which are interconnected;
wherein, the computing result storage unit is used for performing the operation of inverting data sequence;
the divider is used for performing the operation of dividing the data related to inverting sequence with N.

13. The apparatus according to claim 12, wherein the connection relationship between the computing result storage unit and the divider is: an output side of the computing result storage unit is connected with an input side of the divider; or, an input side of the computing result storage unit is connected with an output side of the divider.

Fig. 1

Fig. 2

Fig. 3

Fig. 4

Fig. 5

Write the other data
except the first data
in inverted sequence → Raw data unit → FFT computing unit → Computing result storage unit

Fig. 6

Raw data storage unit → Read the other data except the first data in inverted sequence → FFT computing unit → Computing result storage unit

Fig. 7

Start

Perform FFT on input data sequence — 701

Perform left mirror permutation on the result of FFT, and be divided by N — 702

Finish

Fig. 8

```
        ┌──────────┐        ┌──────────┐
 ─ ─ ─ ─▶│   FFT    │─ ─ ─ ─▶│Left mirror│─ ─ ─ ─▶
        │computing │        │permutation│
        │   unit   │        │   unit    │
        └──────────┘        └──────────┘
```

Fig. 9

Divide the data with N, and read the other data except the first data in inverted sequence

```
┌──────────┐     ┌──────────┐     ┌──────────┐
│ Raw data │     │   FFT    │     │Computing │
│storage   │────▶│computing │────▶│result    │────▶
│  unit    │     │   unit   │     │storage   │
└──────────┘     └──────────┘     │  unit    │
                                  └──────────┘
```

Fig. 10

```
                        Divide              Read the other
                        the data            data except the
                        with N              first data in
                                            inverted sequence
┌──────────┐     ┌──────────┐     ┌──────────┐
│ Raw data │     │   FFT    │     │Computing │
│ storage  │────▶│computing │────▶│ result   │────▶
│   unit   │     │   unit   │     │ storage  │
└──────────┘     └──────────┘     │   unit   │
                                  └──────────┘
```

Fig. 11

Divide the data with N, and write the other data except the first data in inverted sequence

```
┌──────────┐     ┌──────────┐                   ┌──────────┐
│ Raw data │     │   FFT    │                   │Computing │
│ storage  │────▶│computing │──────────────────▶│ result   │
│   unit   │     │   unit   │                   │ storage  │
└──────────┘     └──────────┘                   │   unit   │
                                                └──────────┘
```

Fig. 12

```
                    Write the other
                    data except the
                    first data in
                    inverted              Divide the
                    sequence              data with N
┌──────────┐     ┌──────────┐     ┌──────────┐
│  Data    │     │   FFT    │     │Computing │
│ storage  │────▶│computing │────▶│ result   │────▶
│  unit    │     │   unit   │     │ storage  │
└──────────┘     └──────────┘     │   unit   │
                                  └──────────┘
```

# EP 2 407 891 A1

| | | International application No. |
|---|---|---|
| **INTERNATIONAL SEARCH REPORT** | | PCT/CN2009/075054 |

**A. CLASSIFICATION OF SUBJECT MATTER**

G06F 17/14(2006.01)i

According to International Patent Classification (IPC) or to both national classification and IPC

**B. FIELDS SEARCHED**

Minimum documentation searched (classification system followed by classification symbols)

IPC:G06F,H04L

Documentation searched other than minimum documentation to the extent that such documents are included in the fields searched

Electronic data base consulted during the international search (name of data base and, where practicable, search terms used)

WPI EPODOC CPRS CNKI(FFT IFFT inverse mirror divide length sequence)

**C. DOCUMENTS CONSIDERED TO BE RELEVANT**

| Category* | Citation of document, with indication, where appropriate, of the relevant passages | Relevant to claim No. |
|---|---|---|
| A | CN 101383807 A(UNIV NINGBO)11 March 2009(11.03.2009)the whole document | 1-13 |
| A | WO2008002078 A1(SAMSUNG ELECTRONICS CO.,LTD.) 03 Jan. 2008（03.01.2008）the whole document | 1-13 |
| A | EP1372085 A2(Zarlink Semicoductor Inc.) 17 Dec.2003（17.12.2003）the whole document | 1-13 |

☐ Further documents are listed in the continuation of Box C.     ☒ See patent family annex.

| *    Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 19 Jan. 2010(19.01.2010) | **04 Feb. 2010 (04.02.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WANG,Yankun** Telephone No. (86-10)62411680 |

Form PCT/ISA /210 (second sheet) (July 2009)

## INTERNATIONAL SEARCH REPORT
Information on patent family members

International application No.

PCT/CN2009/075054

| Patent Documents referred in the Report | Publication Date | Patent Family | Publication Date |
|---|---|---|---|
| CN101383807A | 11.03.2009 | NONE | |
| WO2008002078A1 | 03.01.2008 | US2008002782A1 | 03.01.2008 |
| | | MX2008016536A | 19.01.2009 |
| | | KR20090021330A | 03.03.2009 |
| | | EP2039105A1 | 25.03.2009 |
| | | CN101480011A | 08.07.2009 |
| EP1372085A2 | 17.12.2003 | US2003145026A1 | 31.07.2003 |
| | | GB2384876A | 06.08.2003 |
| | | DE60313247TT | 23.08.2007 |
| | | DE60313247EE | 31.05.2007 |

Form PCT/ISA /210 (patent family annex) (July 2009)